Europäisches Patentamt

European Patent Office

Office européen des brevets

(19)

(11) Veröffentlichungsnummer : **0 086 937**
**B1**

(12) EUROPÄISCHE PATENTSCHRIFT

(45) Veröffentlichungstag der Patentschrift :
05.06.85

(21) Anmeldenummer : 83100188.8

(22) Anmeldetag : 12.01.83

(51) Int. Cl.⁴ : **F 16 B 12/20**

(54) **Lösbare Verbindung von zwei rechtwinklig zueinander stehenden Platten, vorzugsweise Möbelplatten.**

(30) Priorität : 11.02.82 DE 3204737

(43) Veröffentlichungstag der Anmeldung :
31.08.83 Patentblatt 83/35

(45) Bekanntmachung des Hinweises auf die Patenterteilung : 05.06.85 Patentblatt 85/23

(84) Benannte Vertragsstaaten :
AT BE FR GB IT NL SE

(56) Entgegenhaltungen :
DE-U- 1 783 394
DE-U- 1 835 555
DE-U- 1 842 045
DE-U- 1 887 888
DE-U- 6 609 707
DE-U- 6 927 101
DE-U- 7 118 627

(73) Patentinhaber : **Häfele KG**
**Postfach 160 Freudenstädter Strasse 74**
**D-7270 Nagold (DE)**

(72) Erfinder : **Koch, Gerhard**
**Bondorfer Weg 28**
**D-7270 Nagold (DE)**

(74) Vertreter : **Vogel, Georg**
**Hermann-Essig-Strasse 35 Postfach 105**
**D-7141 Schwieberdingen (DE)**

**Beschreibung**

Die Erfindung betrifft eine lösbare Verbindung von zwei rechtwinklig zueinander stehenden Platten, vorzugsweise Möbelplatten, bei der in der ersten Platte ein Anzugsbolzen mit einem mittels einer umlaufenden Anzugsnut abgeteilten Anzugskopf festgelegt, in der zweiten Platte in einer ersten Sacklochbohrung ein zylinderförmiger Spannteil drehbar gelagert und der Anzugsbolzen in eine weitere Sacklochbohrung der zweiten Platte eingeführt sind, wobei die Drehachse des Spannteils und die Achse der dieses Spannteil aufnehmenden ersten Sacklochbohrung senkrecht zur Längsachse des Anzugsbolzens und der weiteren Sacklochbohrung, sowie in einer durch die Längsachse des Anzugsbolzens und der diesen aufnehmenden Sacklochbohrung verlaufenden Ebene angeordnet sind, bei der das Spannteil mit dem Anzugskopf des Anzugsbolzens so zusammenwirkt, daß durch Verdrehung des Spannteils der Anzugsbolzen in die zugeordnete Sacklochbohrung eingezogen wird und dabei die beiden Platten verspannt, und bei der das Spannteil eine quer zu seiner Drehachse gerichtete Spannbohrung für die passende Aufnahme des Anzugskopfes des Anzugsbolzens und einen sich daran anschließenden Spannschlitz aufweisen, dessen Ränder in die Anzugsnut des Anzugsbolzens eingreifen.

Eine derartige lösbare Verbindung ist in der DE-A-22 02 906 gezeigt. Das Spannteil ist dabei als Spannriegel ausgebildet, der mit zwei Spannscheiben den Anzugskopf des Anzugsbolzens parallel zur Ebene der zweiten Platte auf zwei Seiten umgreift und in dem umfangsseitigen Spannschlitz führt. Bei der Drehbewegung des Spannriegels wird auf den Anzugsbolzens auch eine Kraftkomponente in Drehrichtung des Spannriegels ausgeübt, die dazu führt, daß der Anzugsbolzen mit seiner Längsachse sich gegenüber der Drehachse des Spannriegels verschiebt. Dies hat zur Folge, daß die zweite Platte beim Spannvorgang eine seitliche Versetzung zur ersten Platte erfährt. Außerdem muß zur Erzielung eines ausreichend großen Spannweges der Spannriegel einen wesentlich größeren Durchmesser als der Anzugsbolzen haben.

Eine Verbindung, bei der ein Anzugsbolzen mit kugelförmigem Anzugskopf und ein hülsenförmiger Spannteil zusammenwirken, ist aus DE-U-7 118 627 bekannt.

Wie die DE-A-30 28 684 zeigt, ist auch ein als Spannbolzen ausgebildetes Spannteil bekannt. Dieses Spannteil erfordert aber eine definierte seitliche Versetzung der Sacklochbohrungen in der zweiten Platte.

Es ist Aufgabe der Erfindung, eine Verbindung der eingangs erwähnten Art zu schaffen, bei der mit einem im Durchmesser kleinen Spannteil und unter Beibehaltung der auf die Längsachse des Anzugsbolzens ausgerichteten Drehachse des Spannteils eine durch die Form des Spannteils gewährleistete, eindeutige axiale Verstellung des Anzugsbolzens auf die Drehachse des Spannteils hinzu erreicht wird.

Diese Aufgabe wird nach der Erfindung dadurch gelöst, daß das Spannteil als Spannbolzen ausgebildet ist und die Spannbohrung bis zur Drehachse des Spannbolzens zylindrisch ist und darüber hinaus in eine Halbkugelpfanne ausläuft und daß der Spannschlitz sich über die Seitenwand des Spannbolzens bis zur tiefsten Stelle der Halbkugelpfanne der Spannbohrung erstreckt.

Bei dieser Ausgestaltung der Spannbohrung des Spannbolzens wird der in die Spannbohrung eingeführte Anzugskopf allseitig bis auf den ausgesparten Spannschlitz geführt, so daß die seitlich wirkenden Kraftkomponenten aufgefangen und ein seitliches Verschieben des Anzugsbolzens sicher verhindert ist. Dabei bleibt während des gesamten Einzugsweges des Anzugsbolzens die Längsachse des Anzugsbolzens auf die Drehachse des Spannbolzens ausgerichtet. Der Spannschlitz in dieser Auslegung erlaubt die Ausnützung des gesamten Verstellweges des Anzugskopfes in der Spannbohrung des Spannbolzens.

Der Spannschlitz der Spannbohrung im Spannbolzen begrenzt zudem die Schließbewegung und da der Spannschlitz nur einseitig die Spannbohrung öffnet, kann der Spannbolzen auch nicht über die Einführungsstellung des Anzugsbolzens hinaus zurückgedreht werden. Die Einführungsstellung definiert daher auch gleichzeitig die Öffnungsstellung der Verbindungsteile.

Eine ausreichend große Anlagefläche für die Spannbohrung des Spannbolzens an dem Anzugskopf des Anzugsbolzens wird nach einer Ausgestaltung dadurch erreicht, daß die Halbkugelkalotte einen Radius aufweist, der dem Radius des Anzugsbolzens entspricht, so daß der Durchmesser der Spannbohrung und der Halbkugelpfanne im Spannbolzen ebenfalls dem Durchmesser des Anzugsbolzens entspricht.

Das Einführen des Anzugskopfes des Anzugsbolzens in die Spannbohrung des Spannbolzens wird dadurch erleichtert, daß die Spannbohrung des Spannbolzens mit einer sich konisch erweiternden Einführungsöffnung versehen ist.

Die begrenzte Verdrehung des Spannbolzens an dem in die Spannbohrung eingeführten Anzugskopf des Anzugsbolzens wird nach einer Ausgestaltung dadurch erhalten, daß der Durchmesser des Spannbolzens größer ist als der Durchmesser des Anzugsbolzens, daß die axiale Länge des den Nutgrund der Anzugsnut bildenden zylinderförmigen Nutgrundabschnittes des Anzugsbolzens der halben Differenz aus dem Durchmesser des Spannbolzens und dem Durchmesser des Anzugsbolzens entspricht und daß die Breite des Spannschlitzes der Spannbohrung des Spannbolzens gleich dem Durchmesser des Nutgrundabschnittes des Anzugsbolzens ist.

Eine definierte, selbsthemmende Endstellung für die Schließbewegung des Spannbolzens wird nach einer Ausgestaltung dann erhalten, wenn die Auslegung so ist, daß das Ende des Spannschlitzes der Spannbohrung des Spannbolzens in einem halbkreisförmigen Anschlag endet, wobei der Radius des Anschlages etwa der halben Breite des Spannschlitzes entspricht.

Um den Anzugskopf ausreichend fest an dem Schaft des Anzugsbolzens anbringen zu können, sieht eine weitere Ausgestaltung vor, daß der Durchmesser des Nutgrundabschnittes des Anzugsbolzens und damit die Breite des Spannschlitzes des Spannbolzens etwa einem Drittel des Durchmessers des Anzugsbolzens entsprechen.

Die Erfindung wird anhand eines in den Zeichnungen dargestellten Ausführungsbeispiels näher erläutert. Es zeigt :

Figur 1 im Schnitt die lösbare Verbindung zwischen zwei Möbelplatten mit dem Anzugsbolzen und dem Spannbolzen,

Figur 2 die lösbare Verbindung nach Fig. 1, auf die mit der Sacklochbohrung für den Spannbolzen versehene Oberseite der zweiten Möbelplatte gesehen,

Figur 3 schematisch die Zuordnung des Anzugsbolzens und des Spannbolzens in der Einführungs- bzw. Öffnungsstellung,

Figur 4 schematisch die Zuordnung des Anzugsbolzens und des Spannbolzens in der Schließstellung und

Figur 5 die Seitenansicht des Spannbolzens.

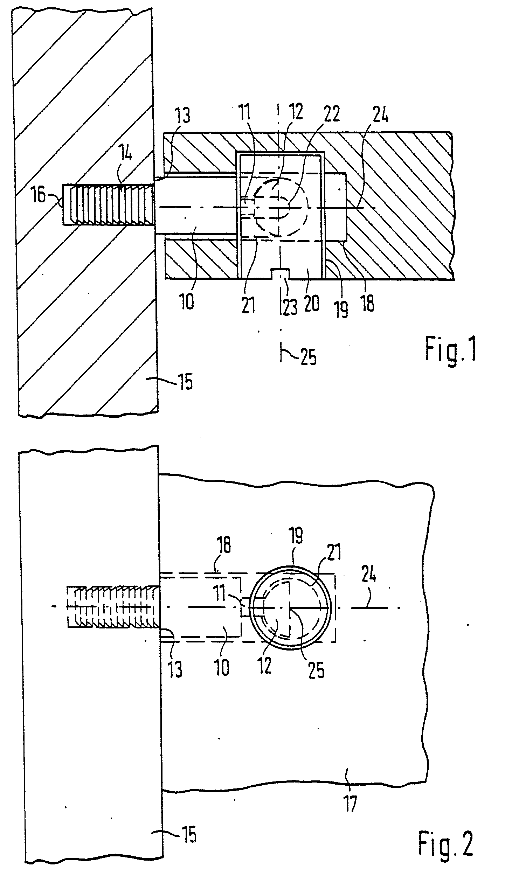

Wie die Fig. 1 und 2 zeigen, ist in der ersten Platte 15 der Anzugsbolzen 10 festgelegt. Dabei ist der mit Widerhaken versehene Befestigungsabschnitt 14 in die Sacklochbohrung 16 der ersten Platte 15 eingeschlagen, bis der Schaft des Anzugsbolzens 10 mit seinem Absatz 13 an der ersten Platte 15 anliegt. Der Anzugskopf 12 ist eine Halbkugelkalotte, die mit der gewölbten Seite eine Nutwand der Anzugsnut bildet und mit der ebenen Seite den Abschluß des Anzugsbolzens 10 bildet. Der Anzugskopf 12 hat denselben Durchmesser wie der Schaft des Anzugsbolzens 10. Der als Halbkugelkalotte ausgebildete Anzugskopf 12 geht im Bereich des Nutgrundes der Anzugsnut in einen zylinderförmigen Nutgrundabschnitt 11 über, dessen Radius kleiner ist als der Radius des anschließenden Schaftes des Anzugsbolzens 10. Der stufige Übergang von dem zylindrischen Nutgrundabschnitt 11 zum Schaft des Anzugsbolzens 10 bildet die andere Nutwand der Anzugsnut. Der Durchmesser des zylinderförmigen Nutgrundabschnittes 11 entspricht etwa einem Drittel des Durchmessers des Anzugsbolzens 10, so daß der Anzugskopf 12 ausreichend fest mit dem Schaft des Anzugsbolzens 10 verbunden ist. Dieselbe Abmessung hat demzufolge dann auch der Spannschlitz 22 der Spannbohrung 21 im Spannbolzen 20. Der Anzugsbolzen 10 wird in die Sacklochbohrung 18 der zweiten Platte 17 eingeführt. Diese Sacklochbohrung 18 ist in der Mitte der Stirnseite der zweiten Platte 17 eingebracht und verläuft parallel zu ihren Oberseiten. Die Sacklochbohrung 18 ist im Durchmesser auf den Durchmesser des Anzugsbolzens 10 und in der Tiefe auf die freie Länge des Anzugsbolzens 10 an der ersten Platte 10 so abgestimmt, daß der Anzugsbolzen 10 in der Sacklochbohrung 18 so weit axial verstellbar geführt ist, daß die zweite Platte 17 an der ersten Platte 15 verspannt werden kann.

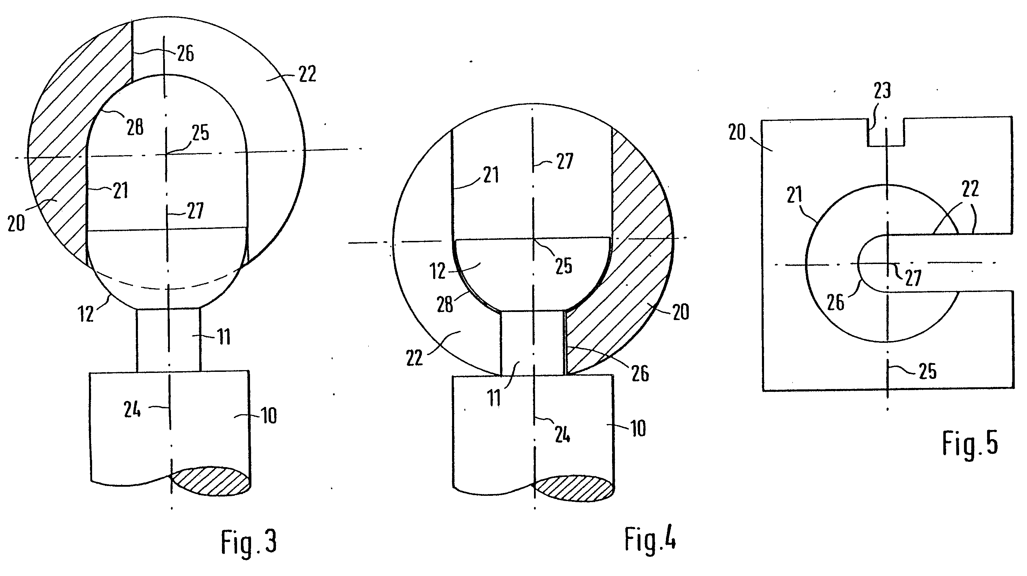

Um die beiden Platten 15 und 17 miteinander verspannen zu können, ist der Spannbolzen 20 vorgesehen. Der Spannbolzen 20 ist in einer Sacklochbohrung 19 drehbar gelagert, die von einer Oberseite der zweiten Platte 17 ausgeht. Dabei ist die Drehachse 25 des Spannbolzens 20 in einer senkrecht zur Längsachse 24 des Anzugsbolzens 10 und der Achse der diesen Spannbolzen 20 aufnehmenden Sacklochbohrung 18 verlaufenden Ebene angeordnet, so daß sich diese beiden Achsen schneiden. Diese Ausrichtung der Sacklochbohrungen 18 und 19 erleichtert das Einbringen derselben in die zweite Platte 17. Außerdem wird die vom Spannbolzen 20 auf den Anzugskopf 13 des Anzugsbolzens 10 übertragene Spannkraft in der Längsachse 24 des Anzugsbolzens 10 wirksam, was ein Verkanten und Verklemmen des Anzugsbolzens 10 in der Sacklochbohrung 18 verhindert. Der Spannbolzen 20 ist so in die Sacklochbohrung 19 eingelassen, daß seine mit dem Schlitz 23 versehene Stirnseite bündig mit der zugekehrten Oberseite der zweiten Platte 17 abschließt. Wie der Spannbolzen 20 mit dem Anzugsbolzen 10 in Wirkverbindung gebracht wird und in Wirkverbindung steht, wird anhand der Fig. 3 bis 5 näher erläutert.

Der Spannbolzen 20, wie er in Fig. 5 in Seitenansicht gezeigt ist, weist eine quer zur Drehachse 25 gerichtete Spannbohrung 21 auf, die im Durchmesser auf den Durchmesser des Anzugsbolzens 10 abgestimmt ist. Damit der Anzugskopf 12 des Anzugsbolzens 10 in diese Spannbohrung 21 eingeführt werden kann, muß der Spannbolzen 20 so ausgerichtet werden, daß die Bohrungsachse 27 mit der Längsachse 24 des Anzugsbolzens 10 zusammenfällt. In dieser in Fig. 3 gezeigten Einführungsstellung kann der Anzugskopf 12 des Anzugsbolzens 10 in die Spannbohrung 21 des Spannbolzens 20 eingeführt werden und zwar soweit, bis die zweite Platte 17 an der ersten Platte 15 anliegt. Dann wird der Spannbolzen 20 im Uhrzeigersinn in die Schließstellung gedreht, wie Fig. 4 zeigt. Dabei wird der Anzugskopf 12 des Anzugsbolzens 10 mehr oder weniger in die Spannbohrung 21 des Spannbolzens 20 eingezogen, bis die zweite Platte 17 fest gegen die erste Platte 15 verspannt ist.

Damit ein ausreichend großer Spannweg erreicht wird, ist der Durchmesser des Spannbolzens 20 größer als der Durchmesser des Anzugsbolzens 10 und entspricht etwa dem 1,5-fachen bis 2-fachen Durchmesser des Anzugsbolzens 10. Die Spannbohrung 21 reicht bis zur Drehachse 25 des Spannbolzens 20 und läuft dann in eine Halbkugelpfanne 28 gleichen Radius aus, wie die Fig. 3 und 4 deutlich erkennen lassen. Damit der Spannbolzen 20 mit dem Anzugskopf 12 des Anzugsbolzens 10 in der Spannbohrung 21 verdreht werden kann, ist ein Spannschlitz 22 vorgesehen, der die Spannbohrung 21 mit der Halbkugelpfanne 28 einseitig so öffnet, daß der Spannschlitz 22 den Nutgrundabschnitt 11 des Anzugsbolzens 10 aufnehmen und führen kann. Wie die Ansicht nach Fig. 5 zeigt, schneidet der Spannschlitz 22 einen Halbzylinder des Spannbolzens 20 in einer Ebene, die senkrecht zur Drehachse 25 des Spannbolzens 20 und parallel zur Bohrungsachse 27 der Spannbohrung 21 verläuft. Dabei reicht der Spannschlitz 22 der Einführungsöffnung der Spannbohrung 21 abgekehrt mit einem halbkreisförmigen Anschlag 26 über die Mitte des Spannbolzens 20 hinaus, so daß in der Schließendstellung die Längsachse 24 des Anzugsbolzens 10 wieder mit der Bohrungsachse 27 der Spannbohrung 21 fluchtet. Es ist aus Fig. 4 deutlich erkennbar, daß die axiale Länge des Nutgrundabschnittes 11 des Anzugsbolzens 10 durch die halbe Differenz aus dem Durchmesser des Spannbolzens 20 und dem Durchmesser des Anzugsbolzens 10 gegeben ist. Außerdem muß die Breite des Spannschlitzes 22 etwa dem Durchmesser des zylinderförmigen Nutgrundabschnittes 11 des Anzugsbolzens 10 entsprechen und der halbkreisförmige Anschlag 26 hat einen Radius, der dem halben Durchmesser des Nutgrundabschnittes 11 des Anzugsbolzens 10 entspricht. Der Spannbolzen 20 kann daher aus der in Fig. 3 gezeigten Einführungs- bzw. Öffnungsstellung um maximal 180° in die in Fig. 4 gezeigte Schließendstellung gedreht werden. Dabei bildet einmal die dem Spannschlitz 22 gegenüberliegende Wand der Spannbohrung 21 durch Anschlag an dem eingeführten Anzugskopf 12 des Anzugsbolzens 10 und zum anderen der halbkreisförmige Anschlag 26 des Spannschlitzes 22 durch Anschlag an dem Nutgrundabschnitt 11 des Anzugsbolzens 10 eine Begrenzung für die Drehbewegung des Spannbolzens 20.

**Patentansprüche**

1. Lösbare Verbindung von zwei rechtwinklig zueinander stehenden Platten (15, 17), vorzugsweise Möbelplatten, bei der in der ersten Platte ein Anzugsbolzen (10) mit einem mittels einer umlaufenden Anzugsnut abgeteilten Anzugskopf (12) festgelegt, in der zweiten Platte in einer ersten Sacklochbohrung (19) ein zylinderförmiges Spannteil (20) drehbar gelagert und der Anzugsbolzen (10) in eine weitere Sacklochbohrung (18) der zweiten Platte eingeführt sind, wobei die Drehachse (25) des Spannteils (20) und die Achse der dieses Spannteil aufnehmenden ersten Sacklochbohrung (19) senkrecht zur Längsachse (24) des Anzugsbolzens (10) und der weiteren Sacklochbohrung (18), sowie in einer durch die Längsachse (24) des Anzugsbolzens (10) und der diesen aufnehmenden Sacklochbohrung (18) verlaufenden Ebene angeordnet sind, bei der das Spannteil (20) mit dem Anzugskopf (12) des Anzugsbolzens (10) so zusammenwirkt, daß durch Verdrehung des Spannteils (20) der Anzugsbolzen (10) in die zugeordnete Sacklochbohrung (18) eingezogen wird und dabei die beiden Platten (15, 17) verspannt, und bei das Spannteil (20) eine quer zu seiner Drehachse (25) gerichtete Spannbohrung (21) für die passende Aufnahme des Anzugskopfes (12) des Anzugsbolzens (10) und einen sich daran anschließenden Spannschlitz (22) aufweisen, dessen Ränder in die Anzugsnut des Anzugsbolzens (10) eingreifen, und der Anzugskopf (12) des Anzugsbolzens (10) mindestens als Halbkugelkalotte ausgebildet ist, deren gewölbte Seite eine Nutwand der Anzugsnut bildet, dadurch gekennzeichnet, daß das Spannteil als Spannbolzen (20) ausgebildet ist und die Spannbohrung (21) bis zur Drehachse (25) des Spannbolzens (20) zylindrisch ist und darüber hinaus in eine Halbkugelpfanne (28) ausläuft und daß der Spannschlitz (22) sich über die Seitenwand des Spannbolzens (20) bis zur tiefsten Stelle der Halbkugelpfanne (28) der Spannbohrung (21) erstreckt.

2. Verbindung nach Anspruch 1, dadurch gekennzeichnet, daß die Halbkugelkalotte einen Radius aufweist, der dem Radius des Anzugsbolzens (10) entspricht, so daß der Durchmesser der Spannbohrung (21) und der Halbkugelpfanne (28) ebenfalls dem Durchmesser des Anzugsbolzens (10) entsprechen.

3. Verbindung nach Anspruch 1 oder 2, dadurch gekennzeichnet, daß der Durchmesser des Spannbolzens (20) größer ist als der Durchmesser des Anzugsbolzens (10), daß die axiale Länge des den Nutgrund der Anzugsnut bildenden zylinderförmigen Nutgrundabschnittes (11) des Anzugsbolzens (10) der halben Differenz aus dem Durchmesser des Spannbolzens (20) und dem Durchmesser des Anzugsbolzens (10) entspricht und daß die Breite des Spannschlitzes (22) des Spannbolzens (20) etwa gleich dem Durchmesser des Nutgrundabschnittes (11) des Anzugsbolzens (10) ist.

4. Verbindung nach einem der Ansprüche 1 bis 3, dadurch gekennzeichnet, daß das Ende des Spannschlitzes (22) des Spannbolzens (20) in einem halbkreisförmigen Anschlag (26) endet, wobei der Radius des Anschlages (26) etwa der halben Breite des Spannschlitzes (22) entspricht.

5. Verbindung nach einem der Ansprüche 1 bis 4, dadurch gekennzeichnet, daß die Spannbohrung (21) des Spannbolzens (20) mit einer sich konisch erweiternden Einführungsöffnung versehen ist.

6. Verbindung nach einem der Ansprüche 1 bis 5, dadurch gekennzeichnet, daß der Durchmesser des Nutgrundabschnittes (11) des Anzugsbolzens (10) und damit die Breite des Spannschlitzes (22) des Spannbolzens (20) etwa einem Drittel des Durchmessers des Anzugsbolzens (10) entsprechen.

**Claims**

1. Detachable junction of two panels perpendicular to one another (15, 17), especially furniture panels, in which in the first panel a retaining bolt (10) secured by means of a retaining head (12) parted by a retaining channel surround, and in the second panel a cylindrical clamping element (20) in a swivel fitting in the first blind drill-hole (19) and the retaining bolt (10) are assembled into a second blind drill-hole (18) in the second panel, whereby the clamping element (20) swivelling axis (25) and the axis of the first blind drill-hole (19) containing this clamping section are arranged at right angles to the longitudinal axis (24) of the retaining bolt (10) and the other blind drill-hole (18), and likewise in a plane running through this longitudinal axis (24) of retaining bolt (10) and the blind drill-hole containing it (18) for which the clamping section (20) combines with the retaining head (12) of the retaining bolt (10) in such a way that by twisting the clamping element (20), the retaining bolt (10) is pulled into the corresponding blind drill-hole (18) and the two panels (15, 17) are secured in place, and by which the clamping element (20) possesses a clamping drill-hole (21) aligned at an angle to its swivelling axis (25) to ensure the retaining head (12) of the retaining bolt (10) is contained correctly and a clamping slot (22) connected to this, whose edges lock into the retaining channel of the retaining bolt and the retaining head (12) of the retaining bolt (10) is designed at least as a semi-universal ball joint, whose convex side forms a grooved wall for the retaining channel, characterised by the fact that, the clamping element is designed as a clamping bolt (20) and the clamping drill-hole (21) is cylindrical until the swivelling axis (25) of the clamping bolt (20), and beyond that spouts out into a semi-ball socket (28) and, that the clamping slot (22) extends beyond the side wall of the clamping bolt (20) to the deepest point of the semi-spherical ball socket of the clamping drill-hole (21).

2. Junction according to claim 1, characterised by the fact that, the semi-universal joint displays a radius which corresponds to the radius of the retaining bolt (10), so that the diameter of the retaining drill-hole (21) and of the semi-spherical ball socket (28) likewise correspond to the diameter of the retaining bolt (10).

3. Junction according to claims 1 or 2, characterised by the fact that, the diameter of the clamping bolt (20) is larger than the diameter of the retaining bolt (10), that the axial length of the channel base section (11) forming the channel base of the retaining bolt (10) corresponds to half the difference of the diameter of the clamping bolt (20) and the diameter of the retaining bolt (10), and, that the width of the clamping slot (22) of the clamping bolt (20) is approximately the same as the diameter of the channel base section (11) of the retaining bolt.

4. Junction according to claims 1 to 3, characterised by the fact that, the end of the clamping slot (22) of the clamping bolt (20) ends in a semicircular stop (26), whereby the radius of the stop (26) corresponds roughly to half the width of the clamping slot (22).

5. Junction according to claims 1 to 4, characterised by the fact that, the clamping drill-hole (21) of the clamping bolt (20) is designed with a conically expanding assembly gap.

6. Junction according to claims 1 to 5, characterised by the fact that, the diameter of the channel base section (11) of the retaining bolt (10) and with it the width of the clamping slot (22) of the clamping bolt (20) corresponds to roughly a third of the retaining bolt diameter.

**Revendications**

1. Assemblage démontable de deux plaques (15, 17) de préférence des plaques de meuble, disposées perpendiculairement l'une par rapport à l'autre, dans lequel, dans la première plaque, une cheville de serrage (10) est maintenue avec une tête de serrage (12) séparée au moyen d'une rainure de serrage circulaire, une pièce de serrage cylindrique (20) est montée tournante dans un premier alésage à fond plein (20) dans la deuxième plaque et la cheville de serrage (10) est introduite dans un autre alésage à fond plein (18) de la deuxième plaque, l'axe de rotation (25) de la pièce de serrage (20) et l'axe du premier alésage à fond plein (19) étant disposés perpendiculairement à l'axe longitudinal (24) de la cheville de serrage (10) et de l'autre alésage à fond plein (18) ainsi que dans un plan passant par l'axe longitudinal (24) de la cheville de serrage (10) et de l'alésage à fond plein (18) logeant cette cheville, la pièce de serrage (20) coopérant avec la tête de serrage (12) de la cheville de serrage (10) de telle manière que par rotation de la pièce de serrage (20), la cheville de serrage (10) est déplacée dans l'alésage à fond plein (18) correspondant et fixant ainsi en place les deux plaques (15, 17) et la pièce de serrage (20) comportant un alésage de serrage (21) disposé transversalement à son axe de rotation (23) adapté à rémevoirslaire tête de serrage (12) de la cheville de serrage (10), et une fente de serrage (22) dont les bords s'engagent dans la rainure de la cheville de serrage (10) et la tête de serrage (12) étant réalisée sous forme de calotte hémisphérique au moins dont la face convexe forme une paroi de la rainure de serrage, caractérisé en ce que la pièce de serrage est réalisée sous forme de boulon creux de serrage (20) et l'alésage (21) est cylindrique jusqu'à l'axe de rotation (25) du boulon creux de serrage (20) et se prolonge au-delà par une cavité hémi-sphérique et la fente de serrage (22) s'étend au-delà de la face latérale du boulon creux de serrage (20) jusqu'au point le plus profond de la cavité hémisphérique (28) de l'alésage (21).

2. Assemblage selon la revendication 1, caractérisé en ce que, la calotte hémisphérique comporte un rayon correspondant au rayon de la cheville de serrage (10) de sorte que le diamètre de l'alésage (21) et de la cavité hémisphérique (28) correspondent également au diamètre de la cheville de serrage (10).

3. Assemblage selon les revendications 1 ou 2, caractérisé en ce que, le diamètre du boulon creux de serrage (20) est plus grand que le diamètre de la cheville de serrage (10), la longueur axiale de la partie cylindrique du fond de rainure (11) de la cheville de serrage (10) formant le fond de la rainure de serrage correspond à la moitié de la différence entre le diamètre du boulon creux (20) et le diamètre de la cheville de serrage (10) et la largeur de la fente de serrage (22) du boulon creux (20) est approximativement égale au diamètre de la partie de fond de rainure (11) de la cheville de serrage (10).

4. Assemblage selon l'une des revendications 1 à 3, caractérisé en ce que, l'extrémité de la fente (22) de la cheville de serrage (20) se termine par une butée en forme de demi-cercle (26), le rayon de la butée (26) correspondant environ à la moitié de la largeur de la fente de serrage (22).

5. Assemblage selon l'une des revendications 1 à 4, caractérisé en ce que, l'alésage (21) du boulon creux (20) comporte une ouverture d'introduction à évasement conique.

6. Assemblage selon l'une des revendications 1 à 5, caractérisé en ce que, le diamètre de la partie de fond de rainure (11) de la cheville de serrage (10) et de ce fait la largeur de la fente de serrage (22) du boulon creux (20) correspondent à environ un tiers du diamètre de la cheville de serrage (10).

Fig.1

Fig.2

Fig.3

Fig.4

Fig.5

0 086 937